Europäisches Patentamt

European Patent Office

Office européen des brevets

(11) Publication number: 0 339 753
A1

## EUROPEAN PATENT APPLICATION

(21) Application number: 89201099.2

(22) Date of filing: 27.04.89

(51) Int. Cl.4: B29C 45/16

(30) Priority: 27.04.88 NL 8801096

(43) Date of publication of application:
02.11.89 Bulletin 89/44

(84) Designated Contracting States:
DE FR NL

(71) Applicant: HARTMAN HOLDING B.V.
Goolkatenweg 55
NL-7521 BE Enschede(NL)

(72) Inventor: Prinsen, Johannes Engelbertus
Gerhardus
Rechterenstraat 1
NL-7556 MJ Hengelo(NL)

(74) Representative: Schumann, Bernard Herman
Johan et al
OCTROOIBUREAU ARNOLD & SIEDSMA
Sweelinckplein 1
NL-2517 GK The Hague(NL)

(54) Die and an injection mould for injection moulding with two components.

(57) The invention relates to a die and an injection mould suitable for injection moulding with two components comprising:
a housing (11) provided with an injection nozzle (4);
an injection channel (22) connecting onto said injecting nozzle (4), onto which channel a first inlet (25) and a second inlet (26) for both components run out at mutual intervals along said injection channel;
a plunger (24) guided slidably in said injection channel;
and
means with which the supply of said two components can be controlled, characterized in that the housing (11) comprises two mutually fitted cylinder jackets (20,21), which jackets form the coaxial injection channel (22), and the first and second inlets (25,26) consist of two bores (28,29) arranged diametrically in relation to said injection channel and the centre lines of which lie in the contact fitting plane of said coaxial cylinder jackets (20,21).

FIG.1

# DIE AND AN INJECTION MOULD FOR INJECTION MOULDING WITH TWO COMPONENTS

The present invention relates to a die and an injection mould equipped with at least one such die for injection moulding with two components.

In the case of injection moulding with two components the first component forms the skin and the second component the core of the injection moulded article. The skin component should preferably have a higher flow than the core component and must therefore be displaceable. Breaking through of the core component to the surface of the injection moulded article must be avoided at all times.

A two-component injection moulded article contains for instance 70% of the skin component and 30% of the core component.

Since the core component is usually of a different technical quality and contains in a number of cases a foaming agent for generating an internal pressure, as a result of which the injection moulded article obtains a stretched form, the occurrence of a mixture of the skin and core components in the surface of the injection moulded article must absolutely be avoided during injection moulding using two components.

Such an injection moulding machine for injection moulding with two components is disclosed in FR-A-2,329,147 having two screw conveyors running out at acute angles in the injection channel. A more compacted injection moulding machine is disclosed in EP-A-0,261,350 having two inlets which are substantially parallel to the injection channel and having a downstream portion running out into the injection channel. Such inlet channels are relatively difficult to manufacture.

A very hard compact die that is well balanced in the distribution of forces and manufactured at lower costs is obtained if according to the invention the housing comprises two mutually fitted cylinder jackets, which jackets form the coaxial injection channel, and the first and second outlets consist of two bores arranged diametrically in relation to the injection channel and the centre lines of which lie in the contact fitting plane of the coaxial cylinder jackets.

When preferably the plunger guided slidably in the injection channel is displaceable using control means between a first position, in which the injection nozzle, the first inlet and the second inlet are closed, a second position, in which the injection nozzle and the first inlet are opened and the second inlet is closed, and a third position, in which the injection nozzle, the first inlet and the second inlet are opened. After completion of an injection moulding cycle the so-called runner contains only skin component and the final moulded stem can be recirculated as a skin component. This results in quite considerable lowering of costs, since the moulded stem forms for example roughly 10% of the injection moulding material used in the incetion cycle.

In order to ensure that after injection moulding of the core component this latter, completely enclosed by the skin component, will leave the injection channel during purging with the skin component, it is recommended that the first inlet forms a profiled annular channel arranged in the injection channel.

The injection moulding channel can substantially be entirely cleared of injection moulding material at the end of the injection moulding cycle if more in preference an injection channel portion connecting to the injection nozzle has a form that is complementary to a head portion of the plunger.

In the case of use of the die according to the invention on an injection mould with a number of parallel, independent injection inlets, these inlets according to the invention can be coupled in simple manner if both inlets of each die each connect to a feed channel lying transversely thereof.

The invention further relates to an injection mould provided with at least one such die, and more preferably two dies.

If in addition at least two dies are connected to a collective feed channel and provided with a central control unit from which the control means for the plunger of each die can be independently controlled, an advantageous injection mould is obtained, whereby the quantity of the injected skin component and core component can be separately adjusted for each injection inlet.

In order to avoid penetration of the core component into the inlet for the skin component during injection of this core component the die further comprises in the die or the injection moulding machine pressure control means blocking return flow into the inlets.

Mentioned and other features of the die and injection moulding machine according to the invention will be further elucidated on the basis of an embodiment given by way of example, whereby reference is made to the annexed drawing.

In the drawing:

fig. 1 is a partly broken away section along an injection mould with a die according to the invention;

fig. 2-5 show sections of the die in different positions of the cycle;

fig. 6 shows schematically an injection mould with a number of dies according to the invention for injection moulding with a number of injection inlets; and

fig. 7 shows on a smaller scale a perspective view of the injection moulded article manufactured with the injection mould from fig. 6.

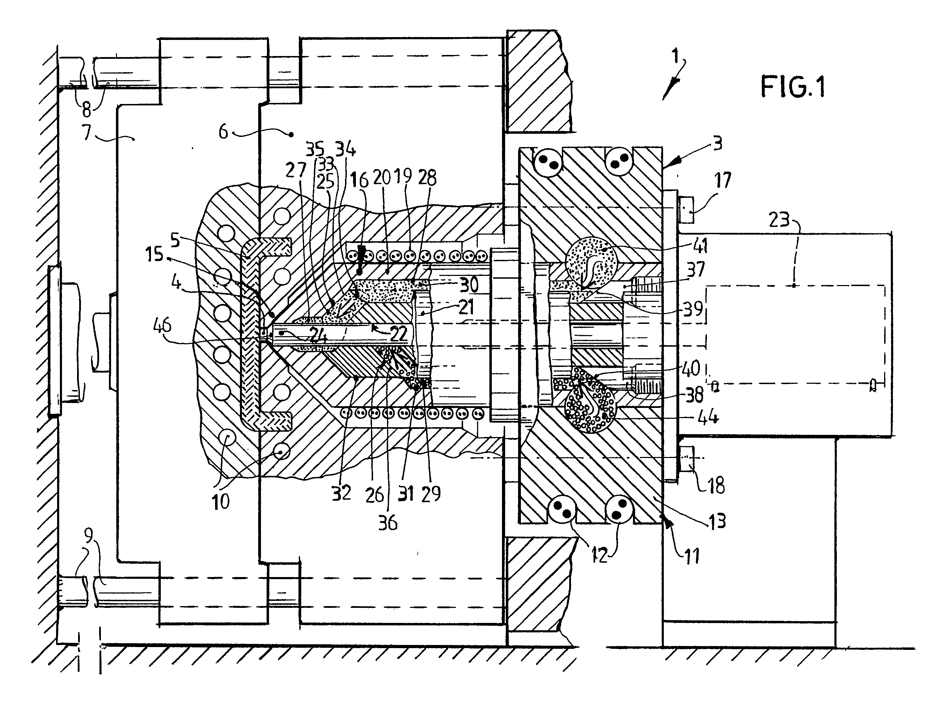

Fig. 1 shows an injection mould 1 according to the invention which is equipped with a die connecting with an injection nozzle 4 onto a form cavity 5 of the injection mould portions guided slidably along guide bars 8 and 9.

Flowing through channels 10 is coolant for cooling the mould parts 6 and 7.

The die 3 comprises a housing 11 having a block 13 provided with heating means 12 against which block a nose 16 resting on a seat 16 is pulled into position with bolts 17 and 18 while enclosing a contact ring 14. The nose is provided on its outer periphery with heating means 19 whereby the nose is kept at a set temperature.

The nose 16 of housing 11 consists of two cylinder jackets 20 and 21 which are arranged mutually fitted and which form a coaxial injection channel 22. The injection channel 22 connects onto the injection nozzle 4 and guides a plunger 24 displaceable therein using control means 23.

Running out into the injection channel 22 in a direction along injection channel 22 away from the injection nozzle 4 are a first inlet 25 for the skin component and at a distance therefrom a second inlet 26 for the core component. At the outflow end the first inlet is provided with an annular channel 27 arranged in the injection channel.

The first inlet 25 and the second inlet 26 consist of the two respective bores 28 and 29 arranged diametrically in relation to the injection channel 22, the respective centre lines 30 and 31 of these bores lying in the cylindrical contact fitting plane 32 of both coaxial cylinder jackets 20 and 21.

The bore 28 connects onto a sloping channel 33 that is formed by a cylindrical recess 34 in the inner cylinder jacket 21 and the conical interior surface 35 of jacket 20.

The bore 29 of the second inlet 26 connects up to a slanting radial bore 36 in the inner cylinder jacket 21.

Both the bores 28 and 29 are closed off at the top with the respective plugs 37 and 38 which are provided with guide surfaces 39 and 40 for the skin material 41 and the core material 42 respectively. The skin material 41 is supplied via a feed channel 43 lying transversely of the bore 28. Core material 42 is fed in the same manner via the feed channel 44 to the bore 29.

Connecting directly onto the injection nozzle 4 is an injection channel portion 45, the form of which is complementary to the head portion 46 of plunger 24.

With reference to fig. 1-5 the injection moulding cycle of the die 3 according to the invention will now be further explained. Identical construction elements are designated with the same reference numerals.

Fig. 1 shows the first plunger position in which the injection nozzle 4, the first inlet 25 and the second inlet 26 are closed.

Controlled using controlling means 23, for example a tandem cylinder, the plunger 24 is drawn up to a position past the annular channel 27 and the skin material 41 flows via the opened portion of injection channel 22 into the form cavity 5. The supply of material 41 via the inlet 25 is stopped when sufficient material has been carried into form cavity 5.

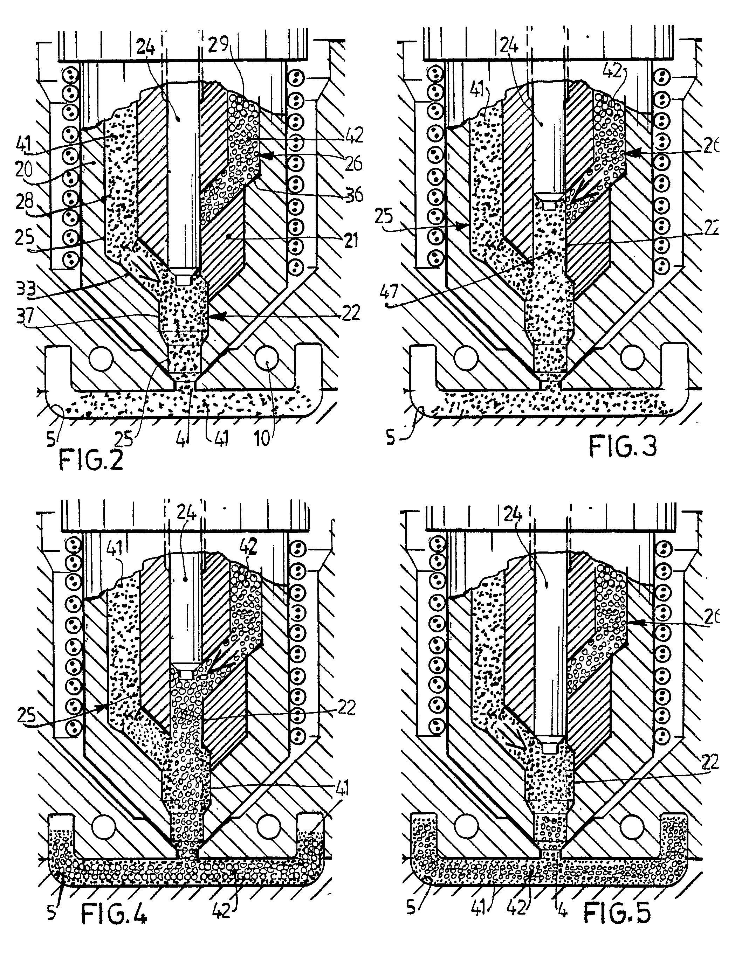

The plunger 24 is then pulled up into the position indicated in fig. 3, whereby the second inlet 26 communicates with injection channel 22. During the drawing up of the plunger 25 additional skin material 41 is delivered from inlet 25, with the result that the space 47 left open by plunger 24 is also filled with skin material 41. Core material 42 is subsequently fed in via inlet 26.

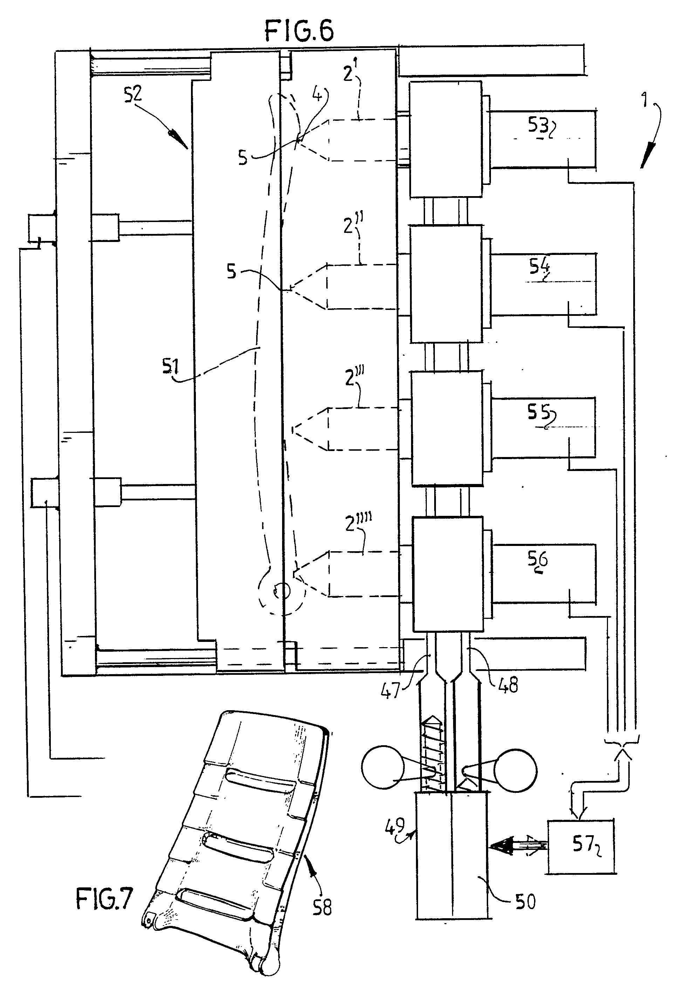

Fig. 4 shows the injection of core material 42 via the injection channel 22. Because a return flow into the inlet 25 is avoided by check valves (not shown) arranged therein or by a pressure maintained therein using pressure regulating means, the core material 42 works its way through between the skin material situated on the wall of the injection channel 22 and the form cavity 5.

After sufficient core material 42 has been supplied the plunger 24 is placed in the position shown in fig. 5, whereby the inlet 26 is once again closed off. Skin material 41 is then again injected in order to purge the injection channel 22. By finally allowing the plunger 24 to drop onto the injection nozzle 4, the whole injection channel is substantially cleared of material 41 or 42 for injection and in the form cavity the core material 42 is completely enclosed in the skin material 41.

Fig. 6 shows an injection mould 1 according to the invention equipped with four dies 2 according to the invention which are connected in parallel to collective feed channels 47 and 48 for skin material 41 and core material 42 respectively, which is delivered via known extruder units 49 and 50 respectively. All the dies 2 connect with their injection nozzle 4 directly onto the respective injection inlets 5 for a form cavity 51 of the mould 52.

The control means 53-56 of the respective dies 2 are each connected to a central control unit 57 with which for each die the plunger can be placed in a desired position.

It will be apparent that for injection moulding of an injection moulded article 58 as shown in fig. 7, varying quantities of skin material 41 and core material 42 must be introduced via the different dies 2',2'',2''',2'''', and the injection cycle must preferably be brought to an end simultaneously.

In preference the skin and core materials to be used consist of compatible thermoplastics pairs of such thermoplastics being for example ABS/PVC, ASA/ABS and ASA/SAN.

## Claims

1. Die suitable for injection moulding with two components comprising:
a housing provided with an injection nozzle;
an injection channel connecting onto said injecting nozzle, onto which channel a first inlet and a second inlet for both components run out at mutual intervals along said injection channel;
a plunger guided slidably in said injection channel; and
means with which the supply of said two components can be controlled, characterized in that the housing comprises two mutually fitted cylinder jackets, which jackets form the coaxial injection channel, and the first and second outlets consist of two bores arranged diametrically in relation to said injection channel and the centre lines of which lie in the contact fitting plane of said coaxial cylinder jackets.

2. Die as claimed in claim 1, wherein the first inlet forms an annular channel arranged in the injection channel.

3. Die as claimed in claim 1 or 2, wherein an injection channel portion connecting onto the injection nozzle has a form that is complementary to a head portion of the plunger.

4. Die as claimed in claims 1-3, wherein the plunger being displaceable using control means between a first position, in which said injection nozzle, said first inlet and said second inlet are closed, a second position, in which said injection nozzle and said first inlet are opened and said second inlet is closed, and a third position, in which said injection nozzle, said first inlet and said second inlet are opened.

5. Die as claimed in claims 1-4, wherein both inlets each connect to a feed channel lying transversely thereof.

6. Injection mould for injection moulding with two components comprising a die as claimed in claims 1-5.

7. Injection mould as claimed in claim 6, wherein at least two dies are connected to a collective feed channel and provided with a central control unit from which the control means for the plunger of each die can be independently controlled.

8. Injection mould as claimed in claim 6 or 7, wherein the control means comprise pressure regulating means, for example check valves.

FIG.1

FIG.2

FIG.3

FIG.4

FIG.5

13455

## FIG.6

## FIG.7

13455

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| D,A | FR-A-2 329 147 (HERLHOFF)<br>* Whole document * | 1-6 | B 29 C 45/16 |
| A | DE-A-3 247 000 (BATTENFELD)<br>* Whole document * | 1,3-6 | |
| D,A | EP-A-0 261 350 (BATTENFELD)<br>* Whole document * | 1,3-6 | |
| A | US-A-3 488 810 (GELLERT)<br>* Column 2, line 70 - column 3, line 13; figures 1-4 * | 3 | |
| A | DE-A-3 504 816 (BATTENFELD)<br>* Page 15, lines 11-20; figures 3,6 * | 7 | |
| A | GB-A-2 046 166 (INCOE CORP.)<br>* Whole document * | 7 | |

TECHNICAL FIELDS SEARCHED (Int. Cl.4)

B 29 C

The present search report has been drawn up for all claims

| Place of search | Date of completion of the search | Examiner |
|---|---|---|
| THE HAGUE | 26-07-1989 | BOLLEN J.A.G. |